# EUROPEAN PATENT SPECIFICATION

(11) **EP 1 941 803 B1**
(45) Date of publication and mention of the grant of the patent: **24.02.2010**
(21) Application number: 07000285.2
(22) Date of filing: 08.01.2007
(51) Int. Cl.: A23C 11/10

(54) **Bean processing method and applications thereof**
Bohnenverarbeitungsverfahren und Anwendungen dafür
Procédé de traitement de fève et ses applications

(43) Date of publication of application: 09.07.2008
(73) Proprietor: Brasfanta Industria e Comercio Ltda., 04547 006 Sao Paulo (BR)
(72) Inventor: Wang, Shu Liang, Taipei City 106 (TW)
(74) Representative: UEXKÜLL & STOLBERG

(56) References cited:
- WO-A-2005/020714
- WO-A2-2004/091314
- DE-A1- 10 320 077
- DE-A1-102004 041 578
- GB-A- 554 438
- US-A- 5 807 602
- US-A- 5 955 134
- US-A1- 2006 165 869
- US-B1- 6 345 572
- US-B1- 6 410 064
- US-B2- 6 838 111
- "Instant dissolving bean powder prodn" DERWENT, 14 December 1994 (1994-12-14), XP002295484 & CN 1 096 172 A (NO 2 FOODSTUFF FACTORY OF CHAN [CN]) 14 December 1994 (1994-12-14)
- CHEN S: "PREPARATION OF FLUID SOYMILK" DRYING TECHNOLOGY, TAYLOR & FRANCIS, PHILADELPHIA, PA, US, 1989, pages 341-352, XP009013453 ISSN: 0737-3937

## Description

### BACKGROUND OF THE INVENTION

### FIELD OF THE INVENTION

The present invention relates to a bean processing method, more particularly a method for making whole bean milk powder and related products without the use of any enzyme or chemical reagent to obtain bean product containing single bean cells.

### DESCRIPTION OF THE RELATED ART

Soybean is a plant first grown in China and offers high nutritional value. Aside from soy proteins, soybean is also in rich with high-quality phytolipids (plant-based lipids). Shen Nong, an ancient emperor in China honored with the title of "Divine Farmer" listed soy as one of the five grains. Soy was later introduced into Korea, Japan and other Asian countries. H. A. Worvath, the father of American soybean, vigorously promoted soybean as a major crop and turned the United States into a world leading soybean producer.

Soybean is in rich with nutrients, including hormones, proteins, lipids, and vitamins. Take the example of isoflavone, it is a kind of phytohormone known to be associated with the prevention of breast cancer, cervical cancer, osteoporosis, and relieving menopause symptoms. Soy proteins contain a complete array of essential amino acids (e.g. histidine, lysine, leucine, isoleucine, and tryptophan) and no cholesterol, and help prevent cancer, hypertension, cardiovascular diseases, and kidney stones.

In contrast to animal oil or animal protein that mostly contain saturated fatty acids, soy lipids are composed of primarily polyunsaturated fatty acids. The essential fatty acids, including linoleic acid (an omega-6 fatty acid) and α-linolenic acid (an omega-3 fatty acid) contained in soybean can be converted into DHA, EPA or prostaglandin precursor inside the body. Soybean oil also contains proper amount of oleic acid (a mono unsaturated fatty acid), which is not an essential fatty acid, but is known to reduce the level of LDL (low-density lipoprotein) and while increase the level of HDL (high-density lipoprotein). Soybean is also an important source of lecithin, which helps improve memory, promote metabolism and activate cells. Carbohydrates contained in soybean, including soy oligosaccharide, cellulose, semi-cellulose, mannan, and bean gum stimulate the peristalsis of intestines, thereby helping to prevent constipation, eliminate toxins and carcinogens in the intestines and alleviate the burden of liver.

The many nutritious components in soybean however cannot be absorbed by human body until the soybean has been processed. In fact, the degree of absorption is directly proportional to the extent of processing. For instance, the rate of soy phytoprotein absorption is very low before soybean is processed. The more refined the soybean has been processed, the higher its utilization rate. For example, the digestion rate of protein in roasted soybean is 60%, that of boiled soybean is 68%; that of cooked soymilk is 85%; while the digestion rate of protein in soy jelly, tofu and soy powder is as high as 95%. That is, only nutrients in cooked soy can be absorbed, for some active factors contained in raw soymilk (e.g. trypsin inhibitor, phytohemagglutinin, and phytic acid), despite of their anti-cancer activity, would inhibit the absorption of nutrients or stimulate the mucosa of intestinal tract. But heating or other processes can minimize the activities of those active factors, while retaining the intrinsic effects of soybean.

On the other hand, soybean has a very hard tissue, which makes its digestion-absorption coefficient low even after it is boiled or roasted. This problem is dealt with by crushing soybean into soy pie or processing it into liquid or powder products after it is steamed, which also make soybean applications convenient. As a result, a variety of soybean processing methods have been introduced.

Currently available soybean processing methods for making liquid soymilk would discard large amount of bean okara or use the okara for no other purposes than fuels or animal feeds after the extraction, instead of making the whole bean into foodstuff for human consumption. It is undoubtedly a significant waste of resources.

On the other hand, processing soybean into powder products makes its preservation and usage more convenient. But the process tends to disrupt the membrane and wall of soy cells, causing the oxidation of unsaturated fatty acids in the cells by lipoxygenase into volatile compounds, including hexanol, heptanol, 2-pentanol, hexanal, and ethyl vinyl ketone, generating a bitter and unpleasant odor. For example, the flavor threshold number of hexanal is low, at around 1ppm. Thus people consume the soy products tend to perceive a sharp beany flavor, which might affect people's acceptance of soy food. Japanese Patent No. 61-219347 [KOKAI] discloses a product decomposed from soy and its production method. This patent features the processing of whole bean into powder. But once the soy cell membranes and walls are destroyed in the pulverization stage, there is still the unpleasant smell problem, which will affect the taste of other food if soy powder is added into it, thereby limiting its applications in the range and the quantity. In another Japanese Patent No. 8-89197 [KOKAI], a soy processing method is disclosed, which can separate soy cells from one and another without destroying the cell membranes or cell walls, hence avoiding the generation of beany flavor. But the process of soy cell separation requires the use of enzyme at room temperature, during which bacteria tend to propagate and lead to fermentation. Enzymatic treatment is also time consuming that will affect the productivity of soy process. These problems are not addressed in the aforementioned patent.

The use of enzyme in soybean processing to separate soy cells might help retain the integrity of cell structure and nutrients contained therein, but it still fails to tackle the problem of cell wall damage. US Patent No. 6410064 discloses a method of separating soybean cells from each other by using pectinase, which is less time consuming and causes less damage to the cell walls. But still, 30% of pectin contained in the cell walls is destroyed, which increases the possibility of oxidation. In addition, soluble protein, isoflavone and other nutritious components might be lost in the soybean soaking stage.

WO 2004/91314, DE 10320077, DE 102004041578 and US 5807602 disclose processes to obtain soybean flour (milled/pulverised soybean) from dehulled soybeans. None of them considers the issue of single cells in the final product.

Thus it is necessary to develop a soy processing method that can retain the nutrients of whole bean, while keeping the soy from being oxidized in the process, hence preventing the generation of unpleasant smell.

### SUMMARY OF THE INVENTION

The conventional soymilk manufacturing method includes the steps of soaking, cooking and crushing, during which nutrients tend to be washed away. In addition, large amount of okara produced in the process is used typically as animal feed or fertilizer, which leads to a waste of resources. In the bean processing, cells can be separated by enzyme or chemical reagent under high pressure. But cell walls are destroyed in the process that increases the chance of bean cells being oxidized. To address the drawbacks of prior art, the primary object of the present invention is to provide a bean processing method, where the steps in sequence of soaking, cooking and crushing are completed under atmospheric pressure in the same cooker to produce bean products containing single cells and effectively reduce the loss of nutritious components.

Another object of the present invention is to provide a method for making whole bean soymilk. Whole bean refers to bean with hull, hilum, hypocotyls and cotyledon, in which rich nutrients, including isoflavone, cellulose, carbohydrate, protein and polyunsaturated fatty acids are retained.

Yet another object of the present invention is to provide a liquid or powder bean product manufactured by the aforesaid processing method and added with such product containing intact single bean cells that increases the nutritious value of food

A further object of the present invention is to provide a bean processing method, which produces bean products containing single cells with intact cell wall under atmospheric pressure without the use of any enzyme or chemical reagent. The processing method provided can prevent the loss of nutrients and cut down the oxidation of bean in the process so to as reduce the generation of the offensive smell of bean.

To achieve the aforesaid objects, the present invention provides a bean processing method, comprising the steps of : (a) washing the bean; (b) cooking the washed bean; (c) crushing the boiled bean; (d) holding the mashed bean in step (c) for a predetermined period of time; and (e) pulverizing the bean in step (d) to obtain a bean product containing single cells.

Preferably water is used to wash the bean in step (a). In step (b), the washed bean is added with water and cooked for 3 - 6 hours at 70 - 100°C. The boiled bean is crushed preliminarily with a crusher. In step (d), crushed bean slurry is left standing for 10 minutes to 2 hours at 70 - 100°C. Subsequently, the slurry is pulverized to obtain bean product containing single cells. The bean is preferably soybean.

The present invention also provides a whole bean soymilk processing method, which employs a tank to perform the functions of soaking, cooking and crushing, and comprises the steps of: (a) washing the soybean with water to remove impurities; (b) putting the washed soybean in a cooker, adding water to soak and then cooking; (c) using a pump to cycle the soybean from the bottom of tank to the top to homogenize the soybean; (d) using a crusher to mash the boiled soybean into a slurry; (e) holding the soybean slurry in step (d) in the tank for a predetermined period of time; (f) using the pump again to cycle the soybean slurry from the bottom of tank to the top to homogenize the slurry; and (g) using a pulverizer to pulverize the soybean slurry to obtain whole bean soymilk containing single soy cells.

"Whole bean soymilk" herewith refers to soymilk containing single bean cells and without separation and removal of the okara and keep the complete nutrient content including isoflavone, cellulose, and polyunsaturated fatty acids, etc.

Preferably in step (b), the amount of water added for soaking and cooking the soybean is 3.5 - 6.0 times the weight of soybean, and cooking is carried out at 70 - 100°C for 3-6 hours. In step (d), the boiled soybean is preliminarily crushed under the speed of 700 - 3500 rpm. The crushed soybean slurry is left standing for 10 minutes to 2 hours at 70 - 100°C, preferably at 80°C for 30 minutes. In step (g), a pulverizer is used to pulverize the soybean slurry into granules 100 - 300µm in size to obtain whole bean soymilk containing single soy cells. The whole bean soymilk may be further processed by means to spray drying to obtain whole bean soy powder.

The present invention also provides a bean product, which is a bean product containing single bean cells made by the aforesaid method. The bean product may be in liquid or powder form. Preferably the bean product is a soy bean product.

Yet another object of the present invention is to provide a bean processing method, characterized in which bean is processed in the same tank throughout the steps of soaking, cooking and crushing to obtain a bean product containing single cells without the use of enzyme or chemical reagent.

To sum up, the bean processing method disclosed herein can produce single-cell bean product without adding enzyme or chemical reagent. Furthermore, the whole bean soymilk processing method also disclosed herein does not produce okara, hence effectively solving the problem of okara utilization after the extraction of liquid soymilk. Okara are rich in isoflavone, fibers, carbohydrates, polyunsaturated fatty acids, proteins and oils. Its recovery helps retain all nutrients contained in the bean and greatly reduce the waste of resources.

### BRIEF DESCRIPTION OF THE DRAWINGS

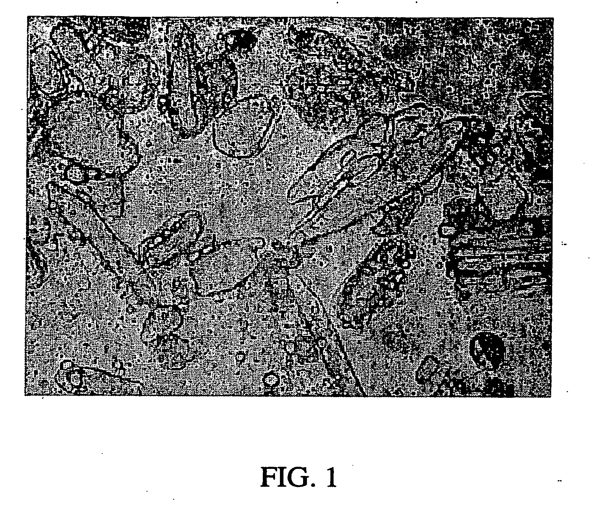

FIG 1 is a microscopic image of single soy cells obtained from the method according to the invention.

### DETAILED DESCRIPTION OF THE INVENTION

The present invention relates to a bean processing method that employs the simple steps of washing, cooking and crushing under atmospheric pressure to produce bean product containing single cells without the use of any enzyme or chemical reagent, and the present invention further applies the method to the manufacture of whole bean soymilk.

In a preferred embodiment of the present invention, take the soy as an example. The soy processing method of the invention comprises the steps of: washing a predetermined amount of soy with water and then transporting the washed soy into the tank with a screw conveyor to complete the feeding step; adding water (preferably hot water) into the tank to soak the soy and starting the cooking after the soy swells; the soaking and cooking procedure are carried out at the temperature of 70 - 100°C for 3-6 hours; the water added for soaking is also used for cooking to retain all soy nutrients released into the water; next subjecting the cooked soy to preliminary crushing into a slurry with a crusher; after leaving the slurry at 70 - 100°C for 10 minutes to 2 hours, carrying out secondary crushing with a pulverizer to completely crush the hull, cotyledon and germ of whole bean without producing any okara

The soy processing method for making whole bean soymilk according to the invention combines the aforesaid processing method and the use of mechanical equipment, which features the use of a tank for soaking, cooking and crushing the soy and comprises the following steps: adding 90°C water that amounts to 3.5 - 6.0 times the weight of soybean into the tank to soak the soybean. The purpose of hot water soaking is to shorten the time of softening soy tissues, prevent bacterial growth, and inactivate lipoxygenase in the soy to prevent it from oxidizing and breaking down unsaturated fatty acids into volatile compounds, such as hexanol, heptanol, 2-pentanol, hexanal, and ethyl vinyl ketone, which tend to emit a beany flavor and unpleasant smell. Subsequently, under the agitating speed of 30-120 rpm per minute throughout the course, cooking the soaked soy in the tank at 70 - 100°C for 3-6 hours, and then turning on the crusher to crush the soy in the tank at the speed of 1700 - 3500 rpm into a slurry. After the slurry is left standing for 30 minutes at 80°C, cycling the slurry repeatedly and pulverizing it again to obtain whole bean soymilk containing single cells and granule size of 100 - 300p.m.

The present invention makes use of the three-in-one functions of a tank to carry out soaking, cooking and crushing. Hot water soaking can help reduce the beany flavor of soy, and even if soluble proteins, isoflavone and other nutrients are released in water during soaking, they will not be lost or dissipated in the subsequent cooking step since the processing is carried out in the same tank, hence achieving the purposes of keeping the food nutrition intact and resources fully utilized. At the same time, small and simplified soymilk machine according to the processing method disclosed allows ready to supply of fresh soymilk, which could increase the consumption of whole bean soymilk significantly, thereby boosting public health.

The features of the present invention are further depicted in the illustration of examples, but the descriptions made in the examples should not be construed as a limitation on the actual application of the present invention.

### Example 1: Preparation of powdered soybean product containing single cells

Put 330kg of soybean into a washer, and spray clean it with 40L of cold water to remove impurities. Add water preheated to 90°C to a cooking tank and feed the washed soybean into the cooking tank with a screw conveyor. Bring the water level in the cooker to 1500L and then heat to 97°C. Cook the soybean at 95°C for 3 hours under atmospheric pressure while stirring it with an agitator at the speed of 65 rpm to ensure homogeneity. After the soybean tissues are softened to a certain extent, use a 30001/hr pump to cycle soybean from the bottom of tank to the top and then convey the cooked soybean to No. 1 crusher (Tyler No. 6 mesh) and crush the soybean into a slurry at 2400 rpm. Then use a jacketed heater to continue heating the slurry at 80°C for 30 minutes to greatly reduce the activities of trypsin inhibitor, lipoxygenase, soybean agglutinin and phytic acid and separate the soy cells. Next, after cycling the slurry with a 30001/hr pump, use a No. 2 crusher (Tyler No. 48 mesh, 3600 rpm) to pulverize all constituents in soybean, including hull, hilum, hypocotyls, and cotyledon into granules of predetermined sizes and single soy cells are observed under the microscope (as shown in FIG. 1). It is apparent that cells in FIG 1 are intact. Subsequently maintain the temperature of soybean slurry at 70-80°C to wait for spray drying. Use an atomizer to dry the slurry at the evaporation rate of 440 kg/hr into powder weighing 283kg. The finished product still contains 2-3% moisture. Finally cool the powder under 27°C and pack the powder into aluminum bags packaging in 201b per bag.

## Claims

1. A bean processing method, comprising the steps of:
(a) washing beans;
(b) cooking the washed beans for 3-6 hours at 70-100°C under atmospheric pressure:
(c) crushing the cooked beans;
(d) holding the crushed beans obtained in step (c) for a predetermined period of time; and
(e) pulverizing the beans obtained in step (d) to obtain a bean product containing single bean cells;
wherein steps (b) - (d) are carried out in the same tank.

2. The method according to claim 1, wherein in step (a) water is used to wash the beans.

3. The method according to claim 1, wherein in step (d) the crushed beans are left holding for 10 minutes to 2 hours at 70 - 100°C.

4. The method according to claim 1, wherein in steps (c) and (e), a crusher or a pulverizer is used to crush the beans.

5. The method according to claim 1, wherein the bean is soybean.

6. A method for making whole bean soymilk, comprising the steps of:
(a) washing the soybean to remove impurities;
(b) feeding the washed soybean into a tank and adding water to cook it for 3-6 hours at 70-100°C under atmospheric pressure;
(c) using a pump to cycle soybean from the bottom of the tank to the top repeatedly to homogenize the soybean;
(d) using a crusher to crush the cooked soybean into a slurry;
(e) holding the crushed soybean slurry in step (d) in the tank for a predetermined period of time;
(f) using the pump again to cycle soybean slurry from the bottom of the tank to the top repeatedly to homogenize the slurry; and
(g) using a pulverizer to pulverize the soybean slurry to obtain whole bean soymilk containing single soy cells.

7. The method according to claim 6, wherein in step (b) the water added is 3,5-6,0 times the weight of soybean.

8. The method according to claim 6, wherein in step (d) the crusher rotates at the speed of 700 - 3500 rpm.

9. The method according to claim 6, wherein in step (e) the crushed soybean slurry in step (d) is held in tank for 10 minutes to 2 hours at 70 - 100°C.

10. The method according to claim 9, wherein in step (e) the crushed soybean slurry in step (d) is held in tank for 30 minutes at 80°C.

11. The method according to claim 9, wherein in step (g) the pulverized soybean have a size ranging from 100 µm to 300 µm.

12. The method according to claim 9, and further comprising a spray drying step after step (g) to obtain whole bean soymilk powder.

13. A bean product containing single cells manufactured according to the method of claim 1.

14. The bean product according to claim 13, which comprises liquid or powder product.

15. The bean product according to claim 13, wherein the soy is soybean.

## Patentansprüche

1. Verfahren zum Verarbeiten von Bohnen mit den Schritten:
(a) Waschen der Bohnen;
(b) Kochen der gewaschenen Bohnen für 3-6 Stunden bei 70-100°C unter atmosphärischem Druck;
(c) Zerkleinern der gekochten Bohnen;
(d) Stehenlassen der zerkleinerten Bohnen aus Schritt (c) über eine vorgegebene Zeitspanne; und
(e) Mahlen der im Schritt (d) erhaltenen Bohnen, um ein Bohnenprodukt zu erhalten, das einzelne Bohnenzellen enthält;
wobei die Schritte (b)-(d) in dem selben Tank durchgeführt werden.

2. Verfahren nach Anspruch 1, wobei im Schritt (a) Wasser verwendet wird, um die Bohnen zu waschen.

3. Verfahren nach Anspruch 1, wobei die im Schritt (d) zerkleinerten Bohnen für 10 Minuten bis 2 Stunden bei 70-100°C stehengelassen werden.

4. Verfahren nach Anspruch 1, wobei in den Schritten (c) und (e) ein Zerkleinerer oder ein Pulverisierer verwendet wird, um die Bohnen zu zerkleinern.

5. Verfahren nach Anspruch 1, wobei die Bohnen Sojabohnen sind.

6. Verfahren zum Herstellen von Sojamilch aus ganzen Bohnen, mit den Schritten:
(a) Waschen der Sojabohnen, um Verunreinigungen zu entfernen;
(b) Einspeisen der gewaschenen Sojabohnen in einen Tank und Zusetzen von Wasser, um sie über 3-6 Stunden bei 70-100°C unter atmosphärischen Druck zu kochen.
(c) Verwenden einer Pumpe, um die Sojabohnen von dem Boden des Tanks zur Oberseite wiederholt umzuwälzen, um die Sojabohnen zu homogenisieren;
(d) Verwenden eines Zerkleinerers zum Zerkleinern der gekochten Sojabohnen zu einem Schlamm;
(e) Halten des Schlamms von zerkleinerten Sojabohnen von Schritt (d) im Tank über eine vorgegebene Zeitspanne;
(f) erneutes Verwenden der Pumpe, um den Sojabohnenschlamm vom Boden des Tanks nach oben wiederholt umzuwälzen, um den Schlamm zu homogenisieren; und
(g) Verwenden eines Pulverisierers zum Pulverisieren des Sojabohnenschlamms, um Sojamilch aus ganzen Bohnen zu erhalten, die einzelne Sojazellen enthalten.

7. Verfahren nach Anspruch 6, wobei das im Schritt (b) zugesetzte Wasser 3,5-6.0 mal das Gewicht der Sojabohnen ausmacht.

8. Verfahren nach Anspruch 6, wobei der im Schritt (d) verwendete Zerkleinerer mit einer Drehzahl von 700-3500 U/Min rotiert.

9. Verfahren nach Anspruch 6, wobei im Schritt (e) der Schlamm aus zerkleinerten Sojabohnen von Schritt (d) im Tank über 10 Minuten bis 2 Stunden bei 70-100°C gehalten wird.

10. Verfahren nach Anspruch 9, wobei im Schritt (e) der Schlamm von zerkleinerten Sojabohnen von Schritt (d) im Tank über 30 Minuten lang bei 80°C gehalten wird.

11. Verfahren nach Anspruch 9, wobei die im Schritt (g) pulverisierten Sojabohnen eine Größe von 100µm bis 300µm haben.

12. Verfahren nach Anspruch 9, ferner mit einem Sprühtrocknungsschritt nach dem Schritt (g), um ein Sojamilchpulver aus ganzen Bohnen zu erhalten.

13. Bohnenprodukt mit Einzelzellen hergestellt nach dem Verfahren von Anspruch 1.

14. Bohnenprodukt nach Anspruch 13, welches ein flüssiges oder pulverförmiges Produkt umfasst.

15. Bohnenprodukt nach Anspruch 13, worin das Soja Sojabohnen sind.

## Revendications

1. Procédé de traitement de haricots comprenant les étapes de:
a) lavage des haricots ;
b) cuisson des haricots lavés pendant 3 à 6 heures à une température de 70 à 100° C sous pression atmosphérique ;
c) broyage des haricots cuits ;
d) maintien des haricots broyés obtenus à l'étape (c) pendant une période de temps prédéterminée et
e) pulvérisation des haricots obtenus à l'étape (d) pour obtenir un produit de haricot contenant des cellules de haricot individuelles
dans lequel les étapes b) à d) sont exécutées dans la même cuve.

2. Procédé selon la revendication 1 dans lequel, dans l'étape a), on utilise de l'eau pour laver les haricots.

3. Procédé selon la revendication 1 dans lequel, dans l'étape d), les haricots broyés sont laissés maintenus pendant une durée de 10 minutes à 2 heures à une température de 70 à 100 °C.

4. Procédé selon la revendication 1 dans lequel, dans les étapes c) et e) on utilise un broyeur ou un pulvérisateur pour broyer les haricots.

5. Procédé selon la revendication 1 dans lequel le haricot est un haricot de soja.

6. Procédé pour faire du lait entier de haricots de soja comprenant les étapes de :
a) lavage des haricots de soja pour enlever les impuretés ;
b) amenée des haricots de soja lavés dans une cuve et ajout d'eau pour les cuire pendant 3 à 6 heures à une température de 70 à 100 °C sous pression atmosphérique ;
c) utilisation d'une pompe pour faire circuler les haricots de soja du fond de la cuve vers le haut de manière répétée pour homogénéiser les haricots de soja ;
d) utilisation d'un broyeur pour broyer les haricots de soja cuits en une pâte épaisse ;
e) maintien de la pâte épaisse de haricots de soja broyés à l'étape (d) dans la cuve pendant une période de temps prédéterminée ;
f) utilisation de la pompe à nouveau pour faire circuler la pâte épaisse de haricots de soja du fond de la cuve vers le haut de manière répétée pour homogénéiser la pâte épaisse et
g) utilisation d'un pulvérisateur pour pulvériser la pâte épaisse de haricots de soja pour obtenir du lait entier de haricots de soja contenant des cellules individuelles de soja.

7. Procédé selon la revendication 6 dans lequel, dans l'étape b), l'eau ajoutée est de 3,5 à 6 fois le poids des haricots de soja.

8. Procédé selon la revendication 6 dans lequel, dans l'étape d), le broyeur tourne à la vitesse de 700 à 3500 trs/min.

9. Procédé selon la revendication 6 dans lequel, dans l'étape e), la pâte épaisse de haricots de soja broyés à l'étape d) est gardée dans la cuve pendant 10 minutes à 2 heures à une température de 70 à 100 °C.

10. Procédé selon la revendication 9 dans lequel, dans l'étape e), la pâte épaisse de haricots de soja broyés à l'étape d) est gardée dans la cuve pendant 30 minutes à 80 °C.

11. Procédé selon la revendication 9 dans lequel, dans l'étape g) les haricots de soja pulvérisés ont une taille qui va de 100 µm à 300 µm.

12. Procédé selon la revendication 9 et comprenant de plus une étape de séchage par pulvérisation après l'étape g) pour obtenir de la poudre de lait entier de haricots de soja.

13. Produit à base de haricots contenant des cellules individuelles fabriquées selon le procédé de la revendication 1.

14. Produit à base de haricots selon la revendication 13 qui comprend un produit liquide ou en poudre.

15. Produit à base de haricots selon la revendication 13 dans lequel le soja est un haricot de soja.
